# EUROPEAN PATENT SPECIFICATION

(11) **EP 4 035 939 B1**
(45) Date of publication and mention of the grant of the patent: **22.11.2023**
(21) Application number: 22153166.8
(22) Date of filing: 25.01.2022
(51) Int. Cl.: B60P 3/10, B62D 53/06

(54) **SEMI-TRAILER FOR TRANSPORTING WATERCRAFT**
SATTELANHÄNGER ZUM TRANSPORT VON WASSERFAHRZEUGEN
SEMI-REMORQUE POUR LE TRANSPORT DE BATEAUX

(30) Priority: 01.02.2021 PL 43681821
(43) Date of publication of application: 03.08.2022
(73) Proprietor: New MBK Sp z o. o., 19-400 Olecko (PL)
(72) Inventor: Kami ski, Bogus aw, 19-400 Olecko (PL)
(74) Representative: Jedrzejewski, Michal

(56) References cited:
- DE-A1-102009 030 072
- IT-A1- TO20 120 814
- US-A- 4 915 577
- US-A- 5 259 647

## Description

The object of the invention is a semi-trailer for transporting watercraft, e.g. boats, yachts, and other vessels that are capable of traversing by means not relying on solid land.

The nature of vessels, i.e. limitation of their free movement to bodies of water, necessitates the methods of their transport, which is usually carried out by boat trailers and semi-trailers. In such a case a vessel can usually be placed on the means of transport directly from the water via winches or indirectly via a crane.

The state of the art also knows low-bed and modular semi-trailers, which are used to transport large-size vessels in particular. Their advantages include low height of the cargo, high maximum payload, and semi-trailer cargo space optimised for length.

Due to the variety of shapes and sizes of vessels hulls, and considering the cost of cargo, in order to guarantee reliability and safety of transport, trailers and semi-trailers are very often customised to meet the specific requirements of the transported cargo.

The semi-trailers known in the state of the art most often have a chassis frame suitable for carrying a given vessel in a convenient manner and with compliance with all regulations and standards. Such semi-trailers are also equipped with various kinds of supports to accommodate the shape of the hull of the transported boat.

The state of the art knows a transport trailer or semi-trailer disclosed in Polish patent No. PL 214724 with a frame with wheelsets and a floor connected to the frame, equipped with movable sections, characterised in that in the floor area there is at least one pair of tilting sections whose axes of rotation are parallel to each other, wherein the pair of tilting sections cooperates with support legs which support the tilting floor sections on one side, and support the frame and/or reinforcements of the frame and/or the floor of the trailer on the other side, wherein the floor sections in a set tilted position constitute a transport trough.

An application for international invention No. WO 2015084172 discloses a structure of a semi-trailer for transporting objects such as boats. The chassis of such a semi-trailer is equipped with wheels and elements that support the transported object. The chassis includes two substantially parallel longitudinal beams and at least one transverse beam that connects both longitudinal beams. The longitudinal beams are fixed in a sliding manner on the transverse beam. The chassis also includes devices for the adjustment of the position of the longitudinal beams on the transverse beam equipped with one or more sliding parts that are configured so as to extend the transverse beam, as well as adjustment devices for determining the position of the sliding parts along the transverse beam.

European patent application No. EP 2894082 discloses a variable-width transport vehicle carrying bed with a central part can be connected to the tractor by means of a coupling, and with two side parts that slide to and from the central part, each carrying a row of front wheels and a row of rear wheels that rotate around fixed axes under the load of the control device. The control device has a hydraulic block and a mechanical transmission located between the connection member and a hydraulic control valve mechanically attached to the central part. Each side part is equipped with a hydraulic swivel block for front wheels and a second hydraulic swivel block for rear wheels, as well as with a drive reversing device for controlling the front wheels in a direction opposite to the rear wheels, which is attached to the respective side part, while various hydraulic hose systems between the central part and the side parts connect the hydraulics of the control hydraulic blocks and the drive hydraulic blocks so as to enable the movement of the side parts relative to the central part.

Another European patent application, No. EP 2090462, discloses an adjustable-length container chassis equipped with a wheeled rear axle and a wheeled front axle, both with wheelsets, and with a chassis frame. The rear transverse beam of the supporting frame has a convexity on its outer side surfaces which enables the rear transverse beam to slide over the rear axle wheelset.

U.S. patent description No. US 4221398 discloses a design of a highway semi-trailer with a selectively adjustable width. This semi-trailer is equipped with two side structures, each having at least one longitudinal row of axles equipped with road wheels, hydraulic cylinders for moving the side structures from a maximum extension position to a minimum extension position. A hitch rod is pivotally connected to the transverse beam which connects the side structures in a sliding manner and which adjusts the control cylinders arranged symmetrically between the rod and the transverse control beam. One pair of auxiliary hydraulic cylinders is connected to the corresponding pair of control cylinders. Each auxiliary actuator provides angular movement to the corresponding axis.

The structures of semi-trailers described e.g. in the international patent application no. WO 2010094935A1 and the Polish invention application no. P. 384628 disclose a structural element of semi-trailers referred to as a gooseneck, i.e. a specifically shaped front part of the frame of a low-floor semi-trailer, which lowers the level of the cargo space above the axles. A gooseneck is a connection between the main cargo bed and the semi-trailer chassis with the tractor.

Semi-trailers used for transporting vessels are equipped with various kinds of supports to accommodate the shape of the hull of the transported boat. These supports allow the vessel to be self-loaded and unloaded even on steep slipways. They often include multiple axles (trailed, lifted, steering/trailing, steering/forced with radio control). They use a detachable front end, with an option to accept combine harvesters and heavy construction machinery, to extend the semi-trailer and widen it sideways by means of movable steel elements and planks. The choice includes approach ramps that are single-piece or folding, made of aluminium or steel, hydraulically lowered and raised, sliding to sides, with manual control via levers or wireless control. All kinds of lighting systems, braking systems, hydraulic approaches, remote controls, loading ramp extensions, motor pumps and other systems are also used.

The use of state of the art solutions is very often time consuming as it requires the development of a special support design, the fabrication of dedicated brackets and their attachment to the structure, which involves numerous personnel.

For these reasons, transporting a vessel appears to be a complex technical endeavour that requires specialised personnel and consumes time and substantial costs.

US 5 259 647 A discloses semi-trailer designed for transporting watercraft similar to that defined by the preamble of claim 1.

Considering the above, the aim of the invention was to develop a semi-trailer which would provide a stable weight-carrying support for the transport of a vessel, protect its hull from damage, ensure safety of driving, wherein the transport with the use of such a semi-trailer would be considerably cheaper and faster compared to state of the art solutions.

The invention is as defined in claim 1.

Preferably, the cross section of each mounting hole and each support column is quadrilateral in shape.

Preferably, the top surface of the support foot is covered with soft material.

Preferably, a locking pin is placed in the pass-through locking slots.

Preferably, the rear platform is equipped with locking ramps.

The object of the invention is illustrated in detail in the figure.

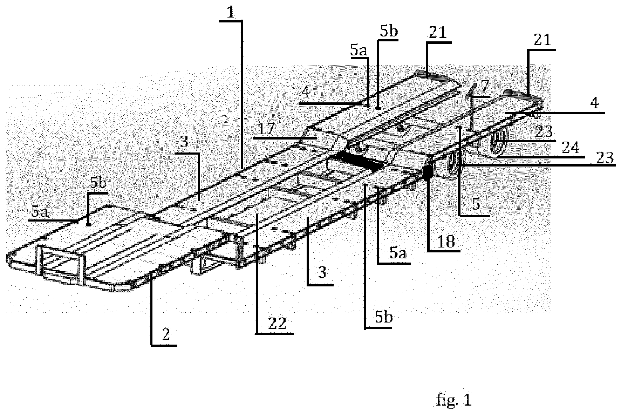

Fig. 1 presents a top perspective view of the semi-trailer for transporting watercraft. It includes the gooseneck-shaped cargo platform 1 made of a flat front platform 2, and a cargo section 3 and rear platform 4 located on both sides of the central beam 22. The semi-trailer according to the invention has two axles 23 that support road wheels 24. Each element of the cargo platform 1, i.e. the front platform 2, the cargo section 3, and the rear platform 4 is equipped with pairs of pass-through mounting holes 5, which are divided into outer mounting holes 5a and inner mounting holes 5b. In one mounting hole located in the rear platform 4 there is a support column 7. The cargo section 2 connects to the front platform 1 by an inclined wall 17, under which there is a compressed air container 18, while the rear platform 3 is equipped with locking ramps 21.

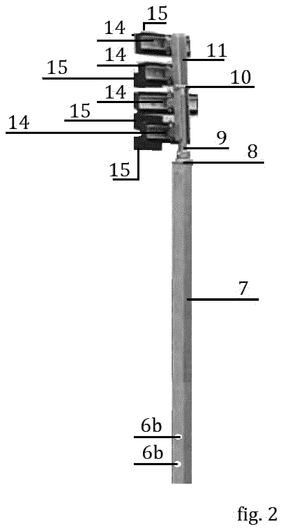

Fig. 2 presents the expanded view of the support column 7, whose lower part has two pairs of pass-through locking slots 6b, and whose upper part has an installation inlet 8 for the insertion of a threaded bracket 9 equipped with a positioning screw 10 with a supporting crossbar 11 and with four profiles 14 articulated to it. Each of the profiles 14 is equipped with a swinging support foot 15, and therefore the support column 7 in the illustrated embodiment is equipped with four support feet 15.

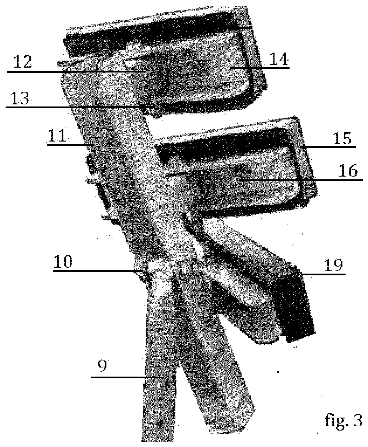

Fig. 3 presents the approximate view of the upper part of the support column 7. The visible threaded bracket 9 is equipped with a positioning screw 10 to which a supporting crossbar 11 is attached. The supporting crossbar 11 is equipped with four mounting projections 12, and each of the mounting projection 12, each articulated to the profile 14. The profile 14 has a shape of an U-section. The connection is made via a pin 13. Each profile 14 includes a flat element that is a support foot 15, while the profile 14 is connected to a support foot 15 by means of a fastener 16, which is a screw in this embodiment. The top surface of each support foot 15 is covered with soft material 19, i.e. rubber.

Fig. 3 presents a pair of pass-through mounting holes below the level of the cargo platform 1. The outer mounting hole 5a is positioned at a right angle β, while the inner mounting hole 5b is inclined at an acute angle α with respect to the transverse axis A. This figure also presents a pair of pass-through locking slots 6a.

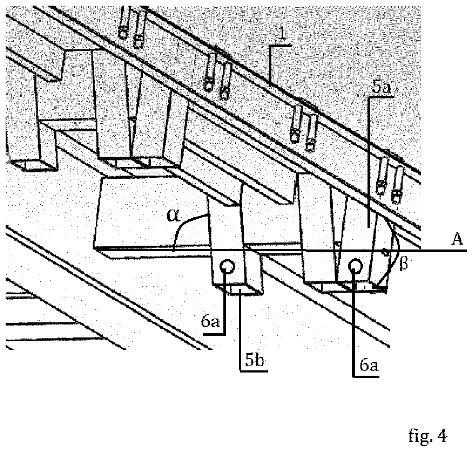

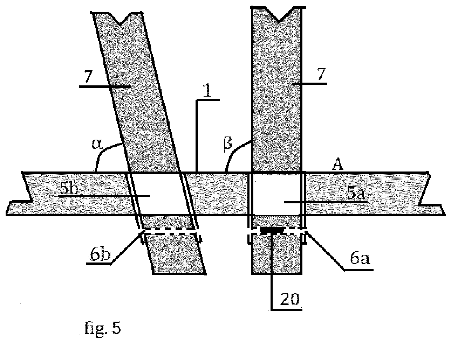

Fig. 4 presents a schematic and cross-sectional view. It includes the outer mounting hole 5a and the inner mounting hole 5b, each including support columns 7. The outer mounting hole 5a is positioned at a right angle β, while the inner mounting hole 5b is inclined at an acute angle α with respect to the transverse axis A. It also presents locking slots 6a, which, in this embodiment, is visible in the outer mounting hole 5a, and locking slots 6b, which are presented in the support column 7. Locking slots 6a and 6b constitute a pass-through hole for the insertion of the locking pin 20. The installation of the locking pin 20 in the slots 6a and 6b makes it possible to firmly attach the support column 7 in the mounting hole 5a and 5b.

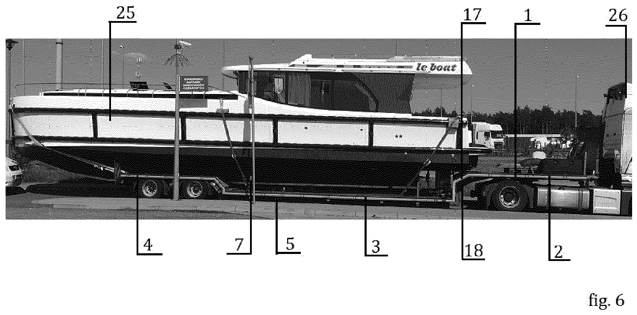

Fig. 6 presents a photography of the semi-trailer for transporting watercraft. It includes the gooseneck-shaped cargo platform 1 made of a front platform 2, and a cargo section 3 and rear platform 4. One mounting hole 5, as well as a support column 7 located in the mounting hole are marked. The cargo section 2 connects to the front platform 1 by an inclined wall 17, under which there is a compressed air container 18. A vessel i.e. a yacht 25 is attached to the cargo platform 1, and the cargo platform 1 is attached to a tractor 26. The attached yacht 25 is ready for transport.

The mounting holes 5 used in the solution, which constitute pairs where each pair is made by an outer mounting hole 5a and an inner mounting hole 5b, and pairs have appropriate angles relative to the transverse axis A to enable stable fastening of support columns 7 in the holes. Stable fastening is guaranteed by the shapes of the mounting holes 5 and the support columns 7, as well as by the possibility of connecting them, and locking them in place. The connection is made by sliding the support columns 7 inside the mounting holes 5, until the locking slots 6a of mounting holes 5 are aligned with the locking slots 6b of support columns 7. The locking pin 20 is then inserted through slots 6a and 6b. This assembly and disassembly is easy and does not require any special equipment. These elements provide support to and enable transport of practically any watercraft.

In the support column 7 there is an installation inlet 8 into which the threaded bracket 9 is inserted. The upper elements of the support 9 provide stable support to the vessel. The support foot 15, which is fixed by means of fasteners 16 with the profile 14 adapts to the shape of the hull of the vessel. As the top surface of the support foot is preferably padded with soft material 19, the layer of paint is not subject to scratching during transport. The supporting crossbar 11 includes at least one mounting projection 12. Preferably, there are four mounting projections 12 and thus four profiles 14. In this case also the four support legs 15 support the transported vessel. The articulated connection, by means of the pin 13, between the mounting projection 12 and the profile 14, and between the threaded bracket 9, by means of the positioning screw 10, and the supporting crossbar 11 makes it easier to precisely fit the device to the transported vessel.

The support columns 7 can be equipped with more pairs of pass-through locking slots 6b, which makes the height of the support columns 7 adjustable, enabling the adjustment of its angular position.

The cargo section 3 connects to the rear platform 4 by an inclined wall 17, under which there is a compressed air container 18. The container 18 is therefore integrated with the cargo platform 1, and compressed air is used in the semi-trailer axle air suspension system. The container 18 further acts as a reinforced profile that provides both reinforcement and lateral rigidity to the semi-trailer. As the container 18 is located under the semi-trailer, the transport height of the cargo can be lowered, while the container can be used to attach the components of the independent suspension of the semi-trailer.

The cargo platform 1 is resting on non-steering axles equipped with an independent air suspension system that enables manual raising and lowering. It can be used to precisely adjust the height of the transported cargo.

Tests carried out by the applicant demonstrate that the maximum technical load can amount to 0.16 MN, and the bed in the "driving" position can optionally be set at a height from 250 mm to 350 mm.

A semi-trailer designed for transporting watercraft according to the invention makes it possible to reduce the duration of loading the vessel onto the vehicle and provides effective protection during wheeled transport.

The application of the invention will reduce the number of personnel required to load and secure the vessel to be transported to as few as two persons, i.e. the driver and a crane operator, and will significantly reduce the costs of adapting the structure of the semi-trailer to transport different types of boats with different hull shapes.

Importantly, the operating costs of the semi-trailer are also reduced, as its own weight is lower, and the air suspension makes it possible to raise axles while driving.

The semi-trailer that is the object of the invention has been made from high quality materials and components.

The geometric stability of the solution and the optimised shape ensure easy loading and unloading in all conditions, as well as safe transportation of vessels.

The semi-trailer can just as well be used as a dry dock to store the vessel off-season, or for overhauls and repairs of the boat's hull.

The applications of the semi-trailer designed for transporting watercraft will include yachts and other vessels capable of traversing by means not relying on solid land.

## Claims

1. A semi-trailer designed for transporting watercraft that includes a gooseneck-shaped cargo platform comprising a front platform, as well as a cargo section and a rear platform located on both sides of a central beam, having at least two axles supporting road wheels, equipped with an air system, for being articulated to a tractor,
**characterised in that** the front platform (2), cargo section (3) and rear platform (4) that comprise the cargo platform (1) are equipped with at least one pair of pass-through mounting holes (5) each, which are divided into an outer mounting hole (5a) and an inner mounting hole (5b) and, with respect to the transverse axis (A) of the cargo platform,
the outer mounting hole (5a) is positioned at a right angle (β) and the inner mounting hole (5b) is inclined at an acute angle (α), wherein each mounting hole (5) is equipped with a pair of pass-through locking slots (6a) located below the level of the cargo platform (1), while at the same time each mounting hole (5) acts as a seat for a slide-in installation of a supporting column (7) whose lower part is equipped with at least one pair of pass-through locking slots (6b), and whose upper part is equipped with an installation inlet (8) that is the location for a threaded bracket (9) equipped with a positioning screw (10), to which a supporting crossbar (11) is fixed that contains at least one mounting projection (12), which articulates, by means of a pin (13), to a profile (14) connected by fastenings (16) to a swinging support foot (15), while at the same time the cargo section (2) is connected to the rear platform (4) by an inclined wall (17) under which a compressed air container (18) is located.

2. A semi-trailer according to claim 1, **characterised in that** the cross section of each mounting hole (5) and each support column (7) is quadrilateral in shape.

3. A semi-trailer according to claim 1, **characterised in that** the top surface of the support foot (15) is covered with soft material (19).

4. A semi-trailer according to claim 1, **characterised in that** in the pass-through locking slots (6a, 6b) there is a locking pin (20).

5. A semi-trailer according to claim 1, **characterised in that** the rear platform (3) is equipped with locking ramps (21).

## Patentansprüche

1. Sattelauflieger, der für den Transport von Wasserfahrzeugen konzipiert ist, der eine schwanenhalsförmige Ladeplattform einschließt, die eine Vorderplattform sowie einen Ladeabschnitt und eine Hinterplattform umfasst, die auf beiden Seiten eines Mittelträgers angeordnet sind, mit mindestens zwei Achsen, die Straßenräder tragen, die mit einem Luftsystem ausgestattet sind, um an eine Zugmaschine angelenkt zu werden, **dadurch gekennzeichnet,**
**dass** die Vorderplattform (2), der Ladeabschnitt (3) und die Hinterplattform (4), die die Ladeplattform (1) umfassen, jeweils mit mindestens einem Paar von Durchgangsbefestigungslöchern (5) ausgestattet sind, die in ein äußeres Befestigungsloch (5a) und ein inneres Befestigungsloch (5b) unterteilt sind,
und wobei in Bezug auf die
Querachse (A) der Ladeplattform das äußere Befestigungsloch (5a) in einem rechten Winkel (β) positioniert ist und das innere Befestigungsloch (5b) in einem spitzen Winkel (α) geneigt ist, wobei jedes Befestigungsloch (5) mit einem Paar Durchgangsverriegelungssnuten (6a) ausgestattet ist, die sich unterhalb des Niveaus der Ladeplattform (1) befinden, während gleichzeitig jedes Befestigungsloch (5) als Sitz für eine Einschubinstallation einer Stützsäule (7) dient, deren unterer Teil mit mindestens einem Paar Durchgangsverriegelungssnuten (6b) ausgestattet ist und deren oberer Teil mit einem Installationseinlass (8) ausgestattet ist, der der Ort für eine mit einer Positionierungsschraube (10) ausgestattete Gewindehalterung (9) ist, an dem eine Stütztraverse (11) befestigt ist, die mindestens einen Befestigungsvorsprung (12) enthält, der mittels eines Bolzens (13) an einem Profil (14) angelenkt ist, das durch Halterungen (16) mit einem schwenkbaren Stützfuß (15) verbunden ist, während gleichzeitig der Ladeabschnitt (2) mit der Hinterplattform (4) durch eine geneigte Wand (17) verbunden ist, unter der sich ein Druckluftbehälter (18) befindet.

2. Sattelauflieger nach Anspruch 1, **dadurch gekennzeichnet, dass** der Querschnitt jedes Befestigungslochs (5) und jeder Stützsäule (7) viereckig geformt ist.

3. Sattelanhänger nach Anspruch 1, **dadurch gekennzeichnet, dass** die obere Oberfläche des Stützfußes (15) mit einem weichen Material (19) bedeckt ist.

4. Sattelanhänger nach Anspruch 1, **dadurch gekennzeichnet, dass** in den Durchgangsverriegelungssnuten (6a, 6b) ein Verriegelungsbolzen (20) vorhanden ist.

5. Sattelanhänger nach Anspruch 1, **dadurch gekennzeichnet, dass** die Hinterplattform (3) mit Verriegelungsrampen (21) ausgestattet ist.

## Revendications

1. Une semi-remorque conçue pour le transport d'embarcations qui comprend une plate-forme de chargement en forme de col de cygne comprenant une plate-forme avant, ainsi qu'une section de chargement et une plate-forme arrière situées de part et d'autre d'une poutre centrale, ayant au moins deux essieux supportant des roues routières, équipée d'un système pneumatique, pour être articulée à un tracteur, **caractérisée**
**en ce que** la plate-forme avant (2), la section de chargement (3) et la plate-forme arrière (4) qui composent la plate-forme de chargement (1) sont équipées chacune d'au moins une paire de trous de montage traversants (5), qui sont divisés en un trou de montage extérieur (5a) et un trou de montage intérieur (5b)
et, par rapport
à l'axe transversal (A) de la plate-forme de chargement, le trou de montage extérieur (5a) est positionné à un angle droit (β) et le trou de montage intérieur (5b) est incliné à un angle aigu (α), chaque trou de montage (5) étant équipé d'une paire de fentes de verrouillage traversantes (6a) situées sous le niveau de la plate-forme de chargement (1), tandis qu'en même temps chaque trou de montage (5) sert de siège pour l'installation par glissement d'une colonne de support (7) dont la partie inférieure est équipée d'au moins une paire de fentes de verrouillage traversantes (6b), et dont la partie supérieure est équipée d'une entrée d'installation (8) qui est l'emplacement d'un support fileté (9) équipé d'une vis de positionnement (10), à laquelle est fixée une traverse de support (11) qui contient au moins une saillie de montage (12), qui s'articule, au moyen d'une goupille (13), à un profilé (14) relié par des attaches (16) à un pied de support pivotant (15), tandis qu'en même temps, la section de chargement (2) est reliée à la plate-forme arrière (4) par une paroi inclinée (17) sous laquelle se trouve un conteneur d'air comprimé (18).

2. Une semi-remorque selon la revendication 1, **caractérisée en ce que** la section transversale de chaque trou de montage (5) et de chaque colonne de support (7) présente une forme quadrilatérale.

3. Une semi-remorque selon la revendication 1, **caractérisée en ce que** la surface supérieure du pied de support (15) est recouverte d'un matériau doux (19).

4. Une semi-remorque selon la revendication 1, **caractérisée en ce que** dans les fentes de verrouillage traversantes (6a, 6b) se trouve une goupille de verrouillage (20).

5. Une semi-remorque selon la revendication 1, **caractérisée en ce que** la plate-forme arrière (3) est équipée de rampes de verrouillage (21).
